# EUROPEAN PATENT SPECIFICATION

(11) **EP 1 251 727 B1**
(45) Date of publication and mention of the grant of the patent: **02.11.2006**
(21) Application number: 01902540.2
(22) Date of filing: 01.02.2001
(51) Int. Cl.: A01D 34/00

(54) **AN AUTONOMOUS MOBILE APPARATUS FOR PERFORMING WORK WITHIN A PREDEFINED AREA**
AUTOMATISCH FAHRENDER APPARAT ZUR DURCHFÜHRUNG VON ARBEITEN IN EINEM VORGEGEBENEN BEREICH
DISPOSITIF MOBILE AUTONOME DESTINE A EFFECTUER DES TRAVAUX DANS UNE ZONE PREDEFINE

(30) Priority: 02.02.2000 GB 0002269
(43) Date of publication of application: 30.10.2002
(73) Proprietor: Logical Technologies Limited, London SE18 5DH (GB)
(72) Inventor: KEABLE, Stephen, John, London SE18 5DH (GB)
(74) Representative: Gambell, Derek
(86) International application number: PCT/GB2001/000422
(87) International publication number: WO 2001/056362

(56) References cited:
- EP-A- 1 016 946
- WO-A-98/41081
- DE-A- 1 507 185
- DE-U- 29 823 263
- US-A- 4 887 415
- US-A- 4 919 224

## Description

The present invention concerns an automatic working machine, that is an autonomous mobile apparatus for performing work within a pre-defined area.

### Background of the invention

As part of our daily lives we often have to perform many jobs which have to be carried out in a progressive manner over a defined working area. Such jobs are often completed with a backwards and forwards motion. Examples of these are household chores such as sweeping, vacuuming, floor polishing, painting and cutting the grass etc. Other examples include construction work and farming jobs, such as cementing, sowing, fertilising, aerating and reaping etc.

Using conventional methods, a user will normally operate a tool or drive a vehicle in a backwards and forwards manner, or up and down within a specified working area. To obtain maximum efficiency, a minimum portion of the new working area should slightly overlap with the previously worked-on area, such as when mowing a lawn to create a striped effect.

Lawn mowers are widely used for the maintenance of lawns, mainly at homes and residences, but also in commercial environments. Mowers were originally manually operated, relying on the user to push them along, but the lawn mower has gradually developed and nowadays, most cutters and mowers are commonly powered by electric or petrol engines.

The user however must still exert a considerable force to push the mower forwards and the majority of mowers still rely on a user to guide and operate them. This makes lawn mowing a moderately difficult and time consuming task. For larger lawns, powered mowers may take the form of small vehicles on which the user sits. These vehicles are usually expensive and are only really suitable for large scale applications.

Numerous proposals have been made in the past, for automatic mowers, which are said to be suitable for automatic and unattended operation. Most of the known proposed mowers are designed to operate only on a pre-prepared lawn, in which some form of mechanical guidance is provided. For example, rails and/or magnets buried in the lawn, or the need to follow a specific pre-programmed path around the lawn, starting from an arbitrary origin. These methods also use cables, pulleys and/or physical barriers as boundaries etc., but such devices are somewhat limited in application, particularly because of the fact that they are not always easy to install and are in effect dedicated to a single lawn.

Within the prior art various techniques are specified for determining a route to follow, and methods are explained that can steer a device or vehicle along the correct route. A few of the methods are explained here briefly as an example, which many previous inventions employ.

Some patents propose that the device or machine has a memory of some description and that it builds and stores a map of the complete working area. This can become a problem if the working area is large. Other methods propose a route control mechanism that determines where the boundary may be, this mechanism continuously monitors the difference between cut and uncut grass. The use of physical guide-rails, tensioned cables and/or pulleys, are also used to determine the boundaries of the working area. Other methods propose the use of scanning light beams and various calculations, which determine the angles and azimuths to certain reference points around the working area.

Patent EP 0266295 details one such application, where the machine steers with the use of guide rails and Patent EP 0194086 applies a similar principle for steering purposes, but using tensioned cables instead, extended across the lawn area. Patent EP 0774702 uses boundary magnets to mark out the working area, whereas US Patent 4694639 proposes the use of a paper tape to memorise the working area. Other ideas to aid steering and route control are described in UK Patent GB 2290212 and UK Patent GB 2285905, which detail steering methods operated by determining the difference between cut and uncut grass. PCT WO 98/01017 also describes a method of following a working area boundary using the difference between cut and uncut grass.

For the automatic machine working within a specific area as in US Patent No. 4919224, the applicant developed a boundary detecting device and a front-wheel steering device, which controls the vehicle movement between boundaries defining the working area. It has also been proposed that only a front-wheel steering device is applied to control the straight motion of the vehicle, and the deflecting angle of motion is to be detected and corrected by means of guide-line sensing.

In the US Patent No. 3744586, a flat surface is used as a reference surface to guide a moving machine. The machine is controlled to move straight by means, which enable it to move along a flat surface. The turning movement of the machine is governed by a turning control device, which controls all four wheels of the machine.

With regard to straight movement, the US Patent No. 3744586 requires a flat surface.

With regard to turning and shifting to make a displacement, the US Patent No. 3744586 does not seem to have a way to turn its "Head", instead, the vehicle moves directly backwards when reaching the boundary and therefore the vehicle seems only easily to be used in bi-directional machines.

A remote control type mower, like US Patent No. 4545453 requires an operator.

US Patent Nos. 3425197 and 4133404 disclose a lawn mower mounted with a device for detecting a margin position between the mowed area and the un-mowed area, in order to automatically guide the mower in circles (outside in, or inside out) until the lawn is mowed within an area. However, its operation must be controlled by a person in the initial mowing circle, thus requiring some manpower. In US Patent No. 4133404, a mower has a function for detouring obstacles on the lawn, but the external area around the obstacle must be mowed in advance.

By means of memory and reproduction devices to produce signals for controlling the route, US Patent No. 3840086 discloses the use of tapes for recording the route and using this as the means of control. Republic of China Patent Application No. 7410043 employs a pen mounted upon a paper reel device for making a route record, which then is read by a photoelectric cell in order for a motorised control to reproduce the route. However, such methods are based on preset procedures to control the machine's course of travel. Therefore, circumstances such as an incorrect starting position or direction, wheel slippage during travel, or touching an obstacle, will cause a deviation from the preset route and potentially cause injury. This route control method is called "Open Loop" control and is deemed somewhat impractical.

It has also been proposed, for example in PCT Patent Application No. WO 92104817 and in French Patent Application No. 2 645 700, to provide a mower whose route is determined in response to obstacles at the boundaries of the surface to be mowed. Such mowers require that the boundary of the surface to be mowed, be provided with obstacles, ie some form of physical barrier or working area containment fence, which the mower's detection system can detect. The boundaries of the surface to be mowed have to be specially prepared to be suitable for mowing by the mower.

International patent publication WO 98/41081 (Solar and Robotics SA) describes improvements to a self-propelled lawn mower. The mower includes at least one drive wheel and at its lower surface at least two juxtaposed cutters, each associated with an electric motor. An electronic system controls the forward movement of the machine. The force supplied by each cutter is measured and an on-board computer uses this information to seek grass surfaces to be mowed according to a memorised algorithm. The limits of the surface to be mowed are detected by magnetic field measurement or the variation of a magnetic field emitted or caused by a wire buried at the limits.

The machine according to US Patent No. 4180964 comprises a metal wire (or band) laid in a desired path as a conductor for controlling the pendulous position of a magnet on the lawn mower. Using electrical contact points and relevant mechanisms to correct its direction, the lawn mower moves along the wire. This technique is well known and used in automation plants. Current in the wire generates an alternating magnetic field, which induces the coils on the automatic vehicle to control the vehicle's movement.

However, if this control method is used to control an entire lawn mowing route, a wire must be laid along the entire lawn mowing route, which would snake and meander up and down the entire lawn. It is therefore believed to be not really practical, especially on large lawns.

### OBJECTS OF THE INVENTION

It is an object of the present invention to provide an automatic working machine to solve or alleviate the previously mentioned problems, and to provide a simple and reliable route control device for such an apparatus.

A preferred object of the present invention is to provide a grass cutting device or lawn mower and in particular, a form of lawn mower, which is adapted for fully automatic and unattended operation.

It is also an object of this invention to provide a mower adapted for automatic and unattended operation, which gives versatility and allows the above disadvantages to be reduced or substantially obviated.

### SUMMARY OF THE INVENTION

According to the invention, there is provided an autonomous mobile apparatus for performing work within a pre-defined area, the apparatus comprising:
- a platform;
- two ground engaging drive wheels positioned one at each side of the platform;
- drive means for independently driving each drive wheel;
- a control device for continuously controlling the drive means, whereby operation of the drive means causes the apparatus to progress over a predetermined route within the predetermined area;
- at least one border sensor coupled to the control device for sensing the proximity of signal means defining the borders of the predefined area, and;
- a navigation device coupled to said control device for continuously sensing the orientation of the apparatus, thereby to detect directional errors to enable corresponding adjustments to be made to the drive wheels, said navigation device comprising a digital compass,
characterised by further comprising obstacle detecting means coupled To said control device for detecting the presence of obstacles lying in the path of said predetermined route, and responding thereto, and a device adapted to emit a warning sound if an obstacle is detected by said obstacle detecting means, wherein said control device is adapted to cause the apparatus to retreat if said obstacle continues to be detected after said warning sound is emitted.

This invention requires no personal supervision and its typical embodiment is a fully automatic lawn mower, which is autonomous, controlling its own course of travel, avoiding and detouring around obstacles and restricted areas via a series of onboard environmental sensors.

In comparison with the prior art, this invention avoids using motor relays, by enabling only solid state switching and electronic power regulation to be employed.

Determination of the coordinates relative to an arbitrary "X, Y, Z" origin is not required. The use of rotary photo encoders for speed and position control is also avoided.

In contrast to US patents 3425197 and 4133404 the present invention provides a device which can be operated automatically, without manpower or personal supervision.

Unlike most of the prior art, the present invention provides two independent drive wheels, mounted on both sides of the apparatus, such that each drive wheel can be driven forward or backwards to move the vehicle along the required route.

The control device is preferably capable of operating on the basis of closed loop control. A "Closed Loop", low cost and reliable route control method is the desired requirement.

In contrast to US patent 3744586, in the present invention, the speed of the two drive wheels can be varied independently so as to keep the mileage of the wheels the same, even when the vehicle encounters uneven surfaces. This control method is an example of "Closed Loop" control, which is deemed to give better precision than the prior art.

The achievement of the closed loop route control method is only a part of the requirement of an automatic vehicle, in fact, a fully automatic vehicle must start automatically at a preset time, leave its parking place and begin working within the wording area. Depending on the conditions within the working area, the fully automatic vehicle can perform various control functions, such as changing its speed, perform detours around stationary obstacles or restricted areas, and stop and warn objects audibly and/or visually that move in front of, or across, its path. Upon completion, or encountering an exceptional condition, such as insufficiency of fuel, incumbent weather, or the working area being too wet, it will stop work automatically. It can also, if so desired, return to the original parking place, or simply park at the working area boundary. In addition, the fully automatic vehicle has a tamper prouf, security alarm function, so that it can operate without any supervision within the working area. Various preferred features of the present invention provide these functions.

The border sensors are preferably in the form of induction coils mounted on the front and rear ends of the apparatus.

The apparatus comprises means coupled to the control device for detecting the presence of obstacles lying in the path of the predetermined route, and responding thereto. For example, an infra-red distance-measuring device is mounted on the apparatus for detecting objects in its path. If the apparatus encounters an obstacle while moving in the forward direction, it is able to detect whether the object is moving or stationary and will emit a warning sound in the direction of the object before continuing ahead. This activity will cause the device to retreat and turn away from the obstacle if it does not respond to the audible warning. Obstacles, which are detected and limit the travel of the apparatus, may be things such as stones, trees, walls, posts or washing lines etc. Alternatively, the obstacle may be the edge of a lawn and different sensors may be provided for the detection of such different kinds of obstacle.

The apparatus may further comprise a power source carried by the platform, such as a rechargeable power source. A plurality of solar cells can be provided for recharging the rechargeable power source or to supplement power derived from a battery. This means that the device can be left in operation for long periods without supervision, and as a result, power consumption and noise levels are low. Means can usefully be included to indicate the state of charge of the power source.

The apparatus may further comprise a ground engaging castor wheel carried by the platform at a position spaced from the drive wheels. By the term "wheel" as used herein, in the context of drive wheels and castor wheels, rollers of suitable dimensions are to be taken to be included.

When the apparatus is adapted to operate as a lawn mower, the platform carries a grass cutting device which may be a rotary cutter, a flail cutter or a reciprocating bar cutter, but which preferably includes a rotary cutting blade assembly.

The apparatus may further comprise means coupled to the control device for detecting prevailing environmental conditions, in particular light levels, temperature, surface moisture and rain. For example, onboard rain and temperature sensors will cause the work to be interrupted on rainy days, or when the ground is wet. Instead of a rain sensor which detects the presence of rain, a humidity sensor may be used which predicts the likely onset of rain in the immediate future.

The control device is preferably pre-programmed with a plurality of selectable different routes within the predetermined area. Ideally, the control device is manually programmable, for example an operator interface is carried by the platform, to enable programming of the control device by an operator and/or the control device includes a signal receiver, to enable programming of the control device by a signal generating remote control programming device. When a remote control programming device is used, we prefer that the necessary processing power for controlling the apparatus is carried on the platform, rather than on the remote control programming device.

The control device may include a real time clock and be programmed to start the operation of the drive devices at a specified time.

The drive means should be capable of independently driving each drive wheel in both forward and reverse directions and capable of independently driving each drive wheel at variable speeds. The drive means may be constituted by separate stepper motors, one for each drive wheel, although these can also be substituted for by DC geared motors. When the apparatus moves straight forward, the speed of the two drive wheels are equal to each other. When the machine body turns, each of the two wheels independently maintain a suitable speed for turning the machine, for example to position the front of the apparatus opposite to the original moving direction or perpendicular to the guide line, where applicable.

In contrast to US patent 3744586, the present invention can directly turn its "Head" and move in a displacement direction in line with the axis of the drive wheels. The movement of the machine is guided by a series of environment and guideline sensing modules, which generate feedback signals to the machine in order to indicate the required movement. In other words, the front of the machine always heads in the direction of movement, although backwards movement is easily possible and is sometimes employed to avoid obstacles, as and when necessary.

The control device preferably includes means for controlling the speed of movement of the apparatus. The apparatus may also further comprise manually operable de-activation means coupled to the control device.

The navigation device is constituted by a digital compass. This is arranged to be continually monitored for directional errors to enable corresponding adjustments to be made to the drive wheels. For example, when the control device is programmed to drive the mower in a straight line, the output of the digital compass is continuously checked to ensure that it remains constant. If the compass reading changes, indicating a deviation from the straight line, the control device adjusts the signals to the two drive motors so as to effect the necessary correction. In another example, when the control device is programmed to turn the mower, for example through 90° or 180°, the output of the digital compass is checked to ensure the desired extent of rotation. If the compass reading does not change by the expected amount, the control device adjusts the signals to the two drive motors to make the necessary correction.

A preferred apparatus also includes a tilt sensor to detect any adverse camber or gradients in the working area, which the apparatus will attempt to avoid and work around. A secret code control procedure can be incorporated for manual starting, and an anti-tampering device including an alarm system for burglar-proof purposes.

The apparatus as described is preferably used with at least one guide line in the form of an elongate conductor positioned to define the borders of the predetermined area, and a signal generator for applying a border signal of predetermined character to the elongate conductor, the border sensor being capable of sensing the border signal as the apparatus approaches a border of the predetermined area. The border sensors mounted on the front of the apparatus detect the position of the guide lines.

Where the predetermined area includes within its borders an excluded area, at least one further elongate conductor may be positioned to define the limits of the excluded area and a signal generator is provided for applying a limit signal of predetermined character, distinguishable from the border signal, to the further elongate conductor, the border sensor being capable of sensing the limit signal as the apparatus approaches the limits of the excluded area.

Thus, in a preferred embodiment of the invention, firstly a wire is laid around the perimeter of the working area, and another wire is laid around the external edge of restricted areas such as ponds, flower beds, rockeries, etc. located within the working area. These wires are fed with alternating current at different frequencies. Border sensors in the form of induction coils are mounted on the front and rear ends of the apparatus for detecting the location of the wires, in order to guide the apparatus within the working area around the restricted areas. An onboard computer starts the power source of the vehicle at a preset time, and the apparatus then begins to operate within the working area until it reaches the boundary wire, which reroutes the apparatus in the opposite direction. Thus, the interior of the working area is mowed in a parallel back and forth manner. Specifically, after the vehicle reaches the first frequency wire, it moves sideways one operational width, and then proceeds back in an opposite direction parallel with the edge of the already-mowed area until reaching the first frequency wire again at the other end of the lawn. Alternatively, a random sequence of cutting can be selected, if desired, but one preferred mode of operation will usually be to move around the working area in parallel lines.

This method of operation will be repeated again and again until all the areas within the working area have been finished. Upon completion, the apparatus may if so desired, complete the job again, or return to the original parking place or stop at the boundary, adjacent to where it has finished. When the apparatus encounters a restricted area on the route, (i.e., detecting a different frequency wire) it will turn around and proceed back in an opposite parallel direction. The apparatus continues in this back and forth manner until one side of the restricted area is finished. It will then detour to the other side of the restricted area, following the restricted area boundary and continue to work.

The invention will now be described in more detail, using illustration only with reference to the accompanying drawings:
Figure 1 is a general view of an embodiment of the mower;
Figure 2A is a diagrammatic representation of the mower with the upper case removed, shown in plan view;
Figure 2B is a diagrammatic representation of the mower with the upper case removed, shown in side view;
Figure 2C is a diagrammatic representation of the mower with the upper case removed, shown in end view;
Figure 3 is a flow chart of the automatic operation of the present invention;
Figure 4 is a functional diagram of the arrangement and control route of the guiding wires; and
Figures 5 and 6 are views, similar to the plan view of Figure 2A, showing alternative embodiments of the invention, with some detail removed for the sake of clarity.

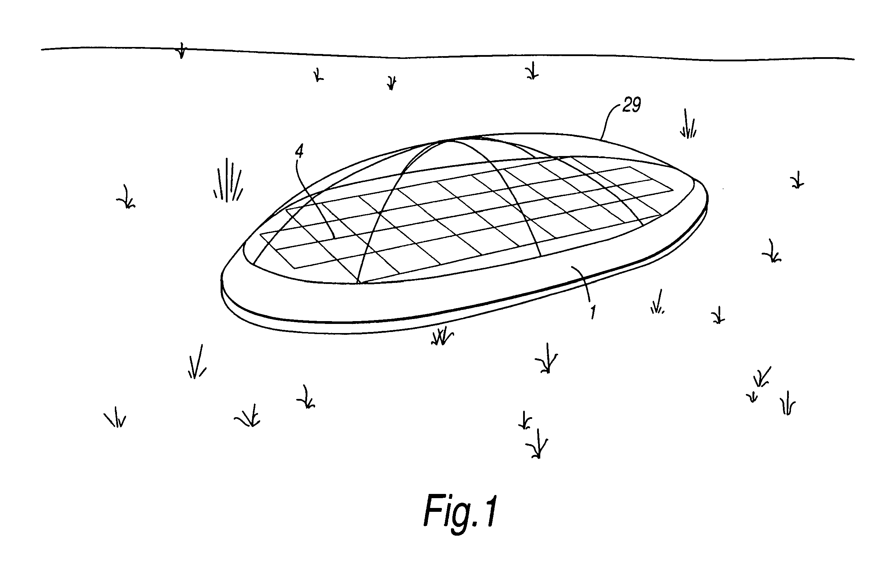

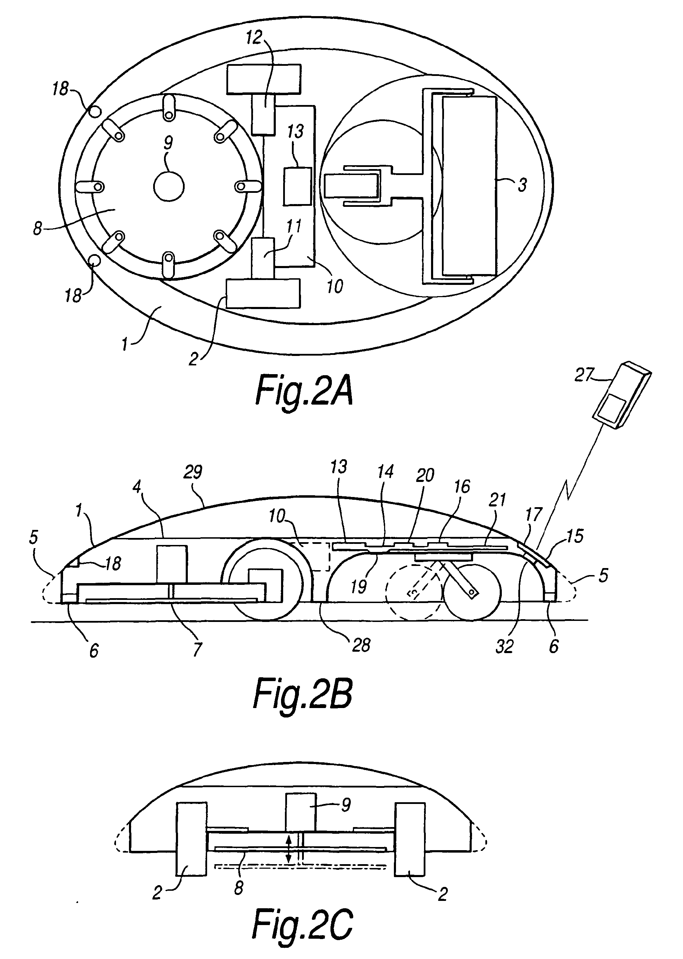

The autonomous mobile apparatus shown in Figures 1 and 2 is in the form of a lawn mower. The mower has a housing 1 which includes a base plate 28, a protective cover 29 and two ground engaging drive wheels 2 positioned one at each side of the base plate 28. The mower also includes a ground engaging castor wheel 3 which is carried by the base plate 28 at a position spaced from the drive wheels 2 and constitutes the third point of triangular stability along with the two drive wheels 2. The drive wheels 2 can be either spiked or have a heavy duty tread to improve aeration and to reduce damage to and compaction of the grass, resulting from constant traversing by the mower.

The mower includes a rechargeable battery 10 carried by the base plate 28.

A touch sensitive bumper 5 is located around the complete circumference of the base plate 28.

Border sensors 6 are provided for sensing the proximity of the borders of the predefined area.

It is also possible to have a carrying handle for ease of use.

To enable the apparatus to operate as a lawn mower, the base plate 28 carries a grass cutting device which includes a rotary cutting blade assembly 8 mounted beneath base plate 28 and a "Height of cut" adjustment mechanism 7 is also provided. The cutting blade assembly 8 is provided with rotating cutters driven by a motor 9 which is powered by the rechargeable battery 10 and which can be geared if required.

Drive means in the form of DC stepper motors 11, 12 are provided for independently driving each drive wheel 2. The drive motors 11, 12 are capable of independently driving each drive wheel in both forward and reverse directions and at variable speeds.

A solar panel made up of a number of solar cells 4 and a charging circuit are provided for storing and supplying the required power by recharging the rechargeable battery 10. The solar cells 4 are located on top of the housing 1. The solar cells 4 are used to recharge the battery 10, which not only powers the cutter assembly 8 and wheels 2 but also provides the power for the control systems for the mower.

A control device in the form of an onboard computer 14 continuously controls the drive motors 11, 12, whereby operation of the drive motors 11, 12 causes the mower to progress over a predetermined route within the predetermined area. The drive wheels 2 can be driven forward, backward and at zero speed, via a transmission control device, which receives control signals from the computer 14.

The computer 14 also controls the operation of the peripheral devices and implements specific procedures according to signals received from the various sensors carried on the mower as described in more detail later.

The computer 14 operates on the basis of closed loop control. A navigation device in the form of a digital compass 13 is coupled to the computer 14 and senses the orientation of the mower. The computer 14 is pre-programmed with a plurality of selectable different routes within the predetermined area. For example, computer 14 controls the mower in order to move forward, backward, and turn.

To enable the computer 14 to be manually programmable, an operator interface 15 is carried by the base plate 28, to enable programming of the computer 14 by an operator and a signal receiver 32 is provided to enable programming of the computer 14 by a remote control unit 27. The necessary processing power for controlling the mower is carried on the platform, rather than on the remote control unit 27.

The operator interface 15, which includes an operation and display panel, is installed at the rear of the mower and is removable or has a protective cover to avoid being exposed and operated by a non-authorized person. The display panel displays necessary operational information including the state of charge of the rechargeable battery 10. In addition, the operator interface 15 enables manual and automatic mower operations to be set and adjusted. One such operation, which requires setting, is the start time of the mower. The computer 14 includes a real time clock 16 and is programmed to start the operation of the drive devices at a specified or preset time. According to this preset time, either a date or a periodic time, the clock 16 generates a signal to start a main switch of the mower. The clock 16 has an independent power supply not shown, enabling it to measure time while the mower is parked and switched off.

The mower also includes manually operable emergency stop switches 17 coupled to the computer 14. These emergency stop switches 17, which may be in the form of push-button and touch switches located throughout the mower, temporarily stop the mower in an emergency and can reset the mower following the emergency.

The computer 14 includes a speed control device to limit the speed of movement of the mower.

The border sensors 6 comprise several groups of coils mounted in the front and rear ends of the mower and coupled to the computer 14 for sensing the alternating magnetic field within the wires laid on the ground, these detect the location of the wires and use the information to control the travelling route of the mower.

Several infra-red distance measuring devices 18 are mounted at the front and the rear of the machine, coupled to the computer 14 for detecting the presence of obstacles lying in the path of the predetermined route, and responding thereto. Each distance measuring devices 18 comprises several transmission and reception units with calculating circuits for measuring the distance between the obstacles and the mower, during travelling.

The digital compass 13 furnishes the computer 14 with directional data to control parallel movement of the mower. Together, the above-mentioned border sensors 6 infra-red distance measuring devices 18 and digital compass 13 furnish the routing control data for the mower.

The mower includes a rain sensor 19 coupled to the computer 14 for detecting prevailing environmental conditions and a tampering detector 20. The rain sensor 19 detects rain or wet ground. The moisture or water on the sensor may be cleaned and dried using a heating method, thus, when the rain sensor detects water continuously because it is raining or the working area is too wet, it signals the computer 14 which then performs a control procedure to stop the operation and return the machine to the parking area. In place of the rain sensor 19, or in addition thereto, a humidity sensor may be used which predicts the likely onset of rain and triggers the computer 14 to stop the operation and return the machine to the parking area.

A tampering detector 20 is used to monitor tampering while the mower is parked. Therefore, if the machine is tampered with by a stranger, the detector 20 will send out a warning signal by means of an alarm 21. The tampering detector 20 and alarm 21 will be turned on to protect the mower after the computer 14 has stopped its operations. The alarm 21 is also used to warn obstacles when encountered by the mower during operation.

In order to start the machine, the operator must key in a secret code into the computer 14, via the operation and display panel 15. If the code is recognized, the computer 14 will accept the next instruction and turn off the power supply to the tampering detector 20. However, if a wrong code is keyed in repeatedly, the alarm 21 will be turned on and activated.

The touch sensitive bumper 5 provides an emergency stop function. In other words, when the lawn mower encounters and touches an obstacle during travel, it will stop moving forward and will detour instead. The push button emergency stop switches 17 for manual control, can stop the engine of the lawn mower i.e., the power of the cutting blade, wheels of the machine, etc. However, the mower will maintain its existing operational condition and will not detour.

The infra-red distance measuring devices 18 detect and measure the distance between the machine body and obstacles in these directions. This distance data is used by the computer 14 for impact-proof, detour and location procedures during travel.

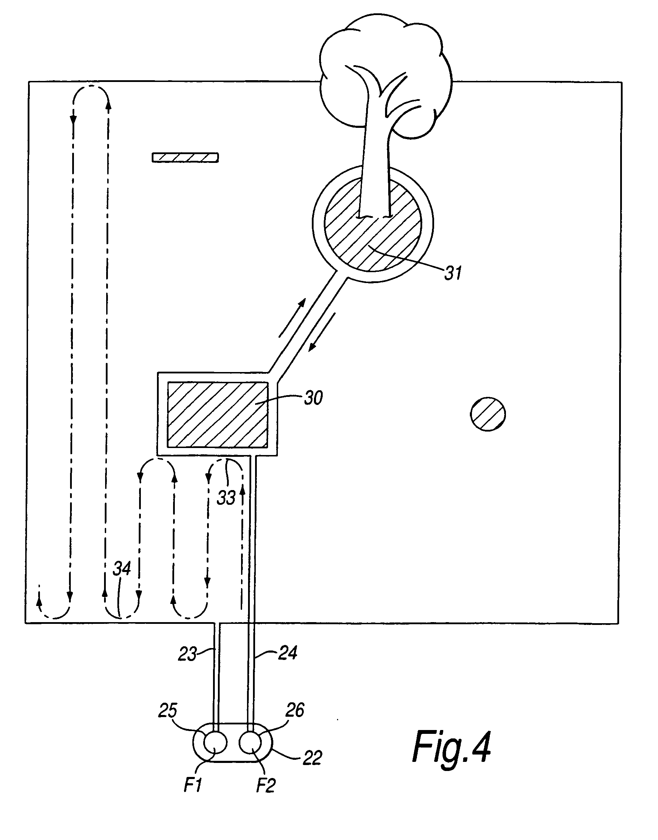

Figure 4 shows an automatic working machine, which can finish work within an area by following a guide wire installed around the boundary and can move back and forth repeatedly to finish the job.

When the lawn mower is cutting grass in a reciprocating parallel pattern, its forward and backward movement is controlled according to the alternating current at a specific frequency sensed by the border sensors 6. The border sensor 6 at the front of the mower also controls the direction of the lawn mower when moving forward along a wire 23. Therefore, the front end border sensor 6 is made up of at least two coils for sensing a deviation from the wire 23 located on the ground between the coils to adjust and control the direction of the mower. The border sensor 6 at the rear end is only for signal detection, and therefore requires only one coil.

As best explained with reference to Figure 4, the mower is used in combination with an alternating current carrying wire 23 which is positioned to define the borders of the working area. A signal generator 22 is installed at a suitable point along the boundary wire and power to the signal generator 22 is generated by a solar panel charging a battery and therefore is always switched on. The signal generator 22 includes a first frequency generator 25 for applying a border signal of predetermined frequency to the wire 23, the sensor 6 being capable of sensing the border signal as the mower approaches a border of the working area. The wire 23, which carries the first frequency signal 25, loops from the signal generator 22, around the lawn in one complete circuit of the boundary, and then back to the signal generator 22.

The working area includes within its borders excluded or restricted areas 30, 31. A second alternating current carrying wire 24 is positioned to define the limits of the excluded area and the signal generator 22 includes a second frequency generator 26 which applies a limit signal of predetermined frequency, different from the border signal, to the wire 24. The sensor 6 is capable of sensing the limit signal as the apparatus approaches the limits of the excluded areas 30, 31. The second wire 24, which carries the second frequency 26, begins at the signal generator 22, surrounds each of the restricted areas 30 and 31 within the lawn boundaries and returns to the generator 22. Between the restricted areas 30 and 31 and between the signal generator 22 and the restricted area 30, the wire 24 overlaps with itself in each direction, to offset the magnetic fields therein. Thus, the restricted areas are defined by the limit signal.

The wires 23 and 24 are laid on the ground or underground at an appropriate depth, so long as they are not damaged.
After the wires have been laid, and the lawn mower has been set initially, the mower can operate automatically.

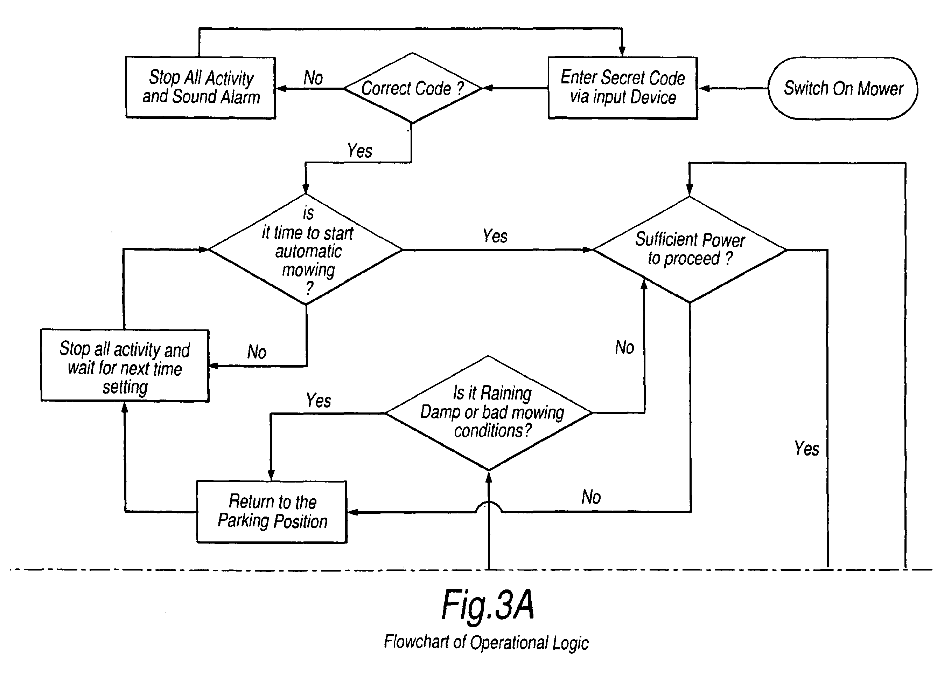

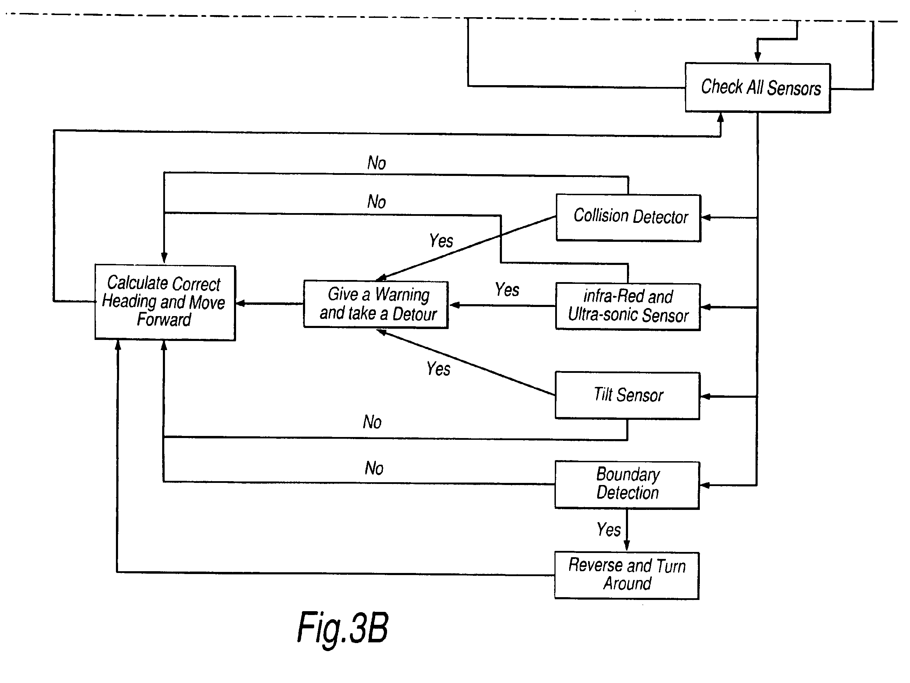

An embodiment of the operational logic to control the mower is set out in the flow chart of Figure 3.

The clock 16 needs to be set when the computer 14 is first switched on by keying in the present time on the operation and display panel 15. From then on, the clock 16 will continue its clock function using an independent power supply without any further setting, and will activate the main power supply of the lawn mower at a preset starting time to achieve automatic starting. The starting time can be set in two manners: a specific time and a periodic time. The specific time is preset to a specific date and time, while the periodic time is set at a certain period. For example, if the lawn mower stops operation due to raining or inclement weather, it can be preset to start again at the same time on the next day.

The lawn mower starts automatically at a preset time. An inspection of the machine's condition is performed to determine whether the lawn mower is ready to operate. For example, if the light levels are insufficient, the machine is reset to the next starting time and turned off. If conditions are normal, the lawn mower will start moving in an up and down direction across the working area. At this time, if the rain sensor 19 has detected rain, it will reset the timing and turn off the machine. If it is not raining, the lawn mower will move forward until the border sensor 6 detects the border signal from the first frequency signal generator 25 at the lawn boundary, where the machine will turn around. This operation is then repeated. During the operation, the lawn mower simultaneously monitors whether the lawn is wet, or the light levels are insufficient. If either condition is met, and after the machine has finished the last line of operation the mower will come to rest at the boundary.

When the lawn mower encounters a restricted area 30 and 31 etc, it senses the limit signal from the second frequency signal generator 26. Therefore, after moving forward and sensing the limit signal of the restricted area 30 at the point 33, the lawn mower turns around and continues back and forth on one side of the restricted area 30. At point 34 the machine has departed from the restricted area 30, and will move to another side of the restricted area 30 by moving along the second wire 24 and moves back and forth on the other side of the restricted area 30. The machine will do the same when it encounters another restricted area, such as 31.

With the distance measuring device 18, the lawn mower can discern between still and moving objects. If the mower encounters a moving object inside the working area, such as a human being or an animal, it will first warn the moving object to leave, and then continue forward. However, if it encounters a still object, it will detour around the still object as it does a restricted area.

The lawn mower may also be operated manually by keying a special code on the operator display panel 15 from automatic to manual operation. After entering the correct secret code, by either using the buttons on the operator display panel 15 or a remote control keypad 27, control of forward and/or backward movement as well as turning, can be performed to cut or trim areas that the automatic operation may not have covered sufficiently.

It should be noted that the rotating speed of the two wheels 2 is not always identical due to uneven terrain. Therefore, the moving direction of the mower will tend to deviate from a straight line. The difference between the mileage recorded by the two wheels 2 is used as a reference in adjusting the machine to move back onto a straight line direction, in addition to the digital compass 13. In other words, the wheel having less mileage is adjusted to a higher speed to compensate for the deviation and bring the machine back on course in order to follow a straight line.

When the backward and forwards movement is complete, the two wheels are activated in order to turn the machine to face in the direction of the boundary wire. The boundary sensors 6 are then able to work in a different mode, which will allow it to follow the boundary wire. This enables the machine to cut and trim the extreme edge of the lawn. This mode of operation can also be used around the edge of any restricted areas that may be encountered such as flower beds, washing lines etc.

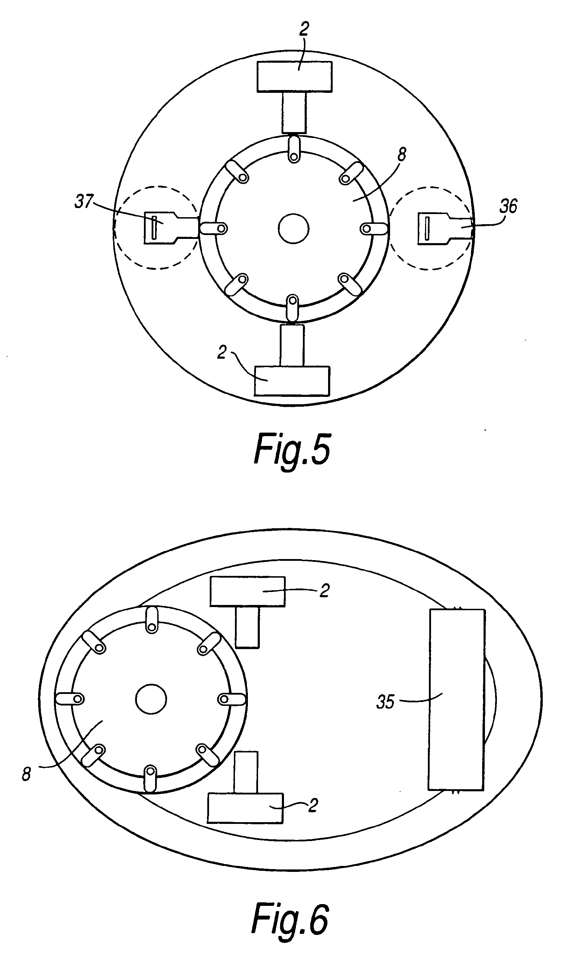

Figure 5 shows the configuration of an alternative embodiment of the invention in which the castor roller 3 is replaced by castor wheels 36, 37 positioned towards the front and rear of the mower.

Figure 6 shows the configuration of an alternative embodiment of the invention in which the castor roller 3 is replaced by a fixed roller 35.

While the present invention has been described with particular reference to a lawn mower, it is to be understood that the invention is equally applicable to other forms of apparatus for performing work within a pre-defined area, such as sweeping, vacuuming, floor polishing, painting, cementing, sowing, fertilising, aerating and reaping etc.
In such cases the grass cutting device is replaced by one or more tools appropriate to the desired task.

## Claims

1. An autonomous mobile apparatus for performing work within a pre-defined area. The apparatus comprising:
- a platform (28);
- two ground engaging drive wheels (2) positioned one at each side of said platform (28);
- drive means (11, 12) for independently driving each said drive wheel;
- a control device (14) for continuously controlling said drive means (11, 12), whereby operation of said drive means (11, 12) causes the apparatus to progress over a predetermined route within said predetermined area;
- at least one border sensor (6) coupled to said control device (14) tor sensing the proximity of signal means (23, 24) defining the borders of said predefined area; and
- a navigation device (1 3) coupled to said control device (14) for continuously sensing the orientation of the apparatus, thereby To detect directional errors to enable corresponding adjustments to be made to the drive wheels, said navigation device comprising a digital compass
**characterised by** further comprising obstacle detecting means (18) coupled to said control device (14) for detecting the presence of obstacles lying in the path of said predetermined route, and responding thereto, and a device adapted to emit a warning sound if an obstacle is detected by said obstacle detecting means, wherein said control device is adapted to cause the apparatus to retreat if said obstacle continues to be detected after said warning sound is emitted.

2. An apparatus according to claim 1, wherein said control device (14) is capable of operating on the basis of closed loop control.

3. An apparatus according to any preceding claim, further comprising a power source (10) carried by said platform (28).

4. An apparatus according to claim 3, wherein said power source (10) is rechargeable.

5. An apparatus according to claim 4, further comprising a plurality of solar cells (4) for recharging said rechargeable power source (10).

6. An apparatus according to claim 1, further comprising a ground engaging castor wheel (3) carried by said platform (28) at a position spaced from said drive wheels (2).

7. An apparatus according to any preceding claim, adapted to operate as a lawn mower, said platform (28) carrying a grass cutting device.

8. An apparatus according to any preceding claim, wherein said control device (14) is pre-programmed with a plurality of selectable different routes within said predetermined area.

9. An apparatus according to any preceding claim, wherein said control device (14) is manually programmable.

10. An apparatus according to claim 9, wherein an operator interface (15) is carried by said platform (28), to enable programming of said control device (14) by an operator.

11. An apparatus according to claim 9, wherein said control device (14) includes a signal receiver (32), to enable programming of said control device (14) by a signal generating remote control programming device (27).

12. An apparatus according to any preceding claim, wherein said drive means (11, 12) are capable of independently driving each said drive wheel in both forward and reverse directions.

13. An apparatus according to any preceding claim, wherein said drive means (11, 12) are capable of independently driving each said drive wheel at variable speeds.

14. The combination of an apparatus according to any preceding claim with at least one elongate conductor (23) positioned to define the borders of said predetermined area, and a signal generator (25) for applying a border signal of predetermined character to said elongate conductor (23), said sensor (6) being capable of sensing said border signal as the apparatus approaches a border of said predetermined area.

15. The combination according to claim 14, wherein said predetermined area includes within its borders an excluded area (30, 31), at least one further elongate conductor (24) is positioned to define the limits of said excluded area (30, 31) and a signal generator (26) is provided for applying a limit signal of predetermined character, distinguishable from said border signal, to said further elongate conductor (24), said sensor (6) being capable of sensing said limit signal as the apparatus approaches the limits of said excluded area.

## Patentansprüche

1. Eine autonome, mobile Vorrichtung zum Verrichten von Arbeit innerhalb eines vorbestimmten Bereiches, wobei die Vorrichtung aufweist:
- eine Plattform (28);
- zwei Antriebsräder (2), die jeweils an den Seiten der Plattform (28) angeordnet sind;
- Antriebsmittel (11, 12) zum unabhängigen Antreiben jedes der Antriebsräder;
- eine Steuervorrichtung (14) zum kontinuierlichen Steuern der Antriebsmittel (11, 12), wobei der Betrieb der Antriebsmittel (11, 12) die Vorrichtung dazu veranlasst, entlang einer vorbestimmten Route innerhalb des vorbestimmten Bereiches fortzuschreiten;
- mindestens einen Randsensor (6), der mit der Steuervorrichtung (14) gekoppelt ist, um die Nähe von Signalmitteln (23, 24) wahrzunehmen, welche die Grenzen des vorbestimmten Bereiches festlegen; und
- eine Navigationsvorrichtung (13), die mit der Steuervorrichtung (14) gekoppelt ist, um die Orientierung der Vorrichtung kontinuierlich wahrzunehmen und dabei Richtungsfehler zu erkennen, um entsprechende Einstellungen an den Antriebsrädern zu ermöglichen, wobei die Navigationsvorrichtung einen digitalen Kompass aufweist,
**dadurch gekennzeichnet, dass** die Vorrichtung ferner ein Hinderniserkennungsmittel (18) aufweist, das mit der Steuervorrichtung (14) gekoppelt ist, um die Gegenwart von Hindernissen wahrzunehmen, die auf der vorbestimmten Route liegen, und auf diese zu reagieren, und eine Vorrichtung zum Aussenden eines Warnsignals, falls das Hinderniserkennungsmittel ein Hindernis erkennt, wobei die Steuervorrichtung die Vorrichtung zum Zurückweichen veranlasst, falls das Hinderniserkennungsmittel das Hindernis nach dem Aussenden des Warnsignals erkennt.

2. Vorrichtung nach Anspruch 1, **dadurch gekennzeichnet, dass** die Steuervorrichtung (14) mittels einer Regelung betreibbar ist,

3. Vorrichtung nach Anspruch 1 oder 2, **dadurch gekennzeichnet, dass** die Vorrichtung ferner eine Energiequelle (10) aufweist, die auf der Plattform (28) angeordnet ist.

4. Vorrichtung nach Anspruch 3, **dadurch gekennzeichnet, dass** die Energiequelle (10) aufladbar ist.

5. Vorrichtung nach Anspruch 4, **dadurch gekennzeichnet, dass** die Vorrichtung ferner Vielzahl von Solarzellen (4) zum Aufladen der aufladbaren Energiequelle (10) aufweist.

6. Vorrichtung nach Anspruch 1, **dadurch gekennzeichnet, dass** die Vorrichtung ferner eine Laufrolle (3) aufweist, die an der Plattform (28) in einer Position beabstandet zu den Antriebsrädern (2) angeordnet ist.

7. Vorrichtung nach einem der vorangegangenen Ansprüche, **dadurch gekennzeichnet, dass** die Vorrichtung als ein Rasenmäher betreibbar ist, wobei die Plattform (28) mit einer Grasschneidevorrichtung versehen ist.

8. Vorrichtung nach einem der vorangegangenen Ansprüche, **dadurch gekennzeichnet, dass** die Steuervorrichtung (14) mit einer Vielzahl von auswählbaren Routen innerhalb des vorbestimmten Bereiches vorprogrammiert ist.

9. Vorrichtung nach einem der vorangegangenen Ansprüche, **dadurch gekennzeichnet, dass** die Steuervorrichtung (14) manuell programmierbar ist.

10. Vorrichtung nach Anspruch 9, **dadurch gekennzeichnet, dass** die Plattform (28) mit einer Bedienerschnittstelle (15) versehen ist, um die Programmierung der Steuervorrichtung (14) durch einen Bediener zu ermöglichen.

11. Vorrichtung nach Anspruch 9, **dadurch gekennzeichnet, dass** die Steuervorrichtung (14) einen Signalempfänger (32) aufweist, um die Programmierung der Kontrollvorrichtung (14) mittels einer Fembedienungsvorrichtung (27) zu ermöglichen.

12. Vorrichtung nach einem der vorangegangenen Ansprüche, **dadurch gekennzeichnet, dass** die Antriebsräder durch die Antriebsmittel (11, 12) unabhängig voneinander in Vorwärts- und Rückwärtsrielitung betreibbar sind.

13. Vorrichtung nach einem der vorangegangenen Ansprüche, **dadurch gekennzeichnet, dass** die Antriebsräder durch die Antriebsmittel (11, 12) unabhängig voneinander mit variablen Geschwindigkeiten betreibbar sind.

14. Anordnung einer Vorrichtung nach einem der vorangegangenen Ansprüche und mindestens eines gestreckten Leiters (23), der derart angeordnet ist, dass er die Grenzen des vorbestimmten Bereiches festlegt, und eines Signalgenerators (25) zum Generieren eines Grenzsignals von vorbestimmter Eigenschaft, das auf den gestreckten Leiter (23) anwendbar ist, wobei der Sensor (6) das Grenzsignal erkennt, während sich die Vorrichtung einer Grenze des vorbestimmten Bereiches nähert.

15. Anordnung nach Anspruch 14, **dadurch gekennzeichnet, dass** der vorbestimmte Bereich innerhalb seiner Grenzen aufweist: einen ausgeschlossenen Bereich (30, 31), mindestens einen weiteren gestreckten Leiter (24), der derart angeordnet ist, dass er die Grenzen des ausgeschlossenen Bereiches (30, 31) festlegt, und einen Signalgenerator (26) zum Generieren eines weiteren Grenzsignals von vorbestimmter Eigenschaft, das auf den weiteren gestreckten Leiter (24) anwendbar ist und von dem Grenzsignal unterscheidbar ist, wobei der Sensor (6) das Grenzsignal erkennt, während sich die Vorrichtung der Grenze des vorbestimmten des ausgeschlossenen Bereiches nähert.

## Revendications

1. Dispositif mobile autonome destiné à effectuer des travaux dans une zone prédéfinie, le dispositif comprenant :
- une plate-forme (28) ;
- deux roues d'entraînement venant en prise avec le sol (2) positionnées chacune de chaque côté de ladite plate-forme (28) ;
- des moyens d'entraînement (11, 12) destinés à entraîner de manière indépendante chaque dite roue d'entraînement ;
- un dispositif de commande (14) destiné à commander de manière continue lesdits moyens d'entraînement (11, 12), moyennant quoi le fonctionnement desdits moyens d'entraînement (11, 12) amène le dispositif à progresser sur une trajectoire prédéterminée au sein de ladite zone prédéterminée ;
- au moins un détecteur de limite (6) couplé audit dispositif de commande (14) afin de détecter la proximité de moyens de signal (23, 24) définissant les limites de ladite zone prédéfinie ; et
- un dispositif de navigation (13) couplé audit dispositif de commande (14) permettant de détecter de manière continue l'orientation du dispositif, afin de détecter ainsi des erreurs de direction pour permettre d'effectuer des ajustements correspondants à effectuer sur les roues d'entraînement, ledit dispositif de navigation comprenant un compas numérique,
**caractérisé en ce qu'**il comprend en outre des moyens de détection d'obstacles (18) couplés audit dispositif de commande (14) afin de détecter la présence d'obstacles se trouvant dans la trajectoire de ladite route prédéterminée, et d'y répondre, et un dispositif adapté pour émettre un signal d'alarme si un obstacle est détecté par lesdits moyens de détection d'obstacles, dans lequel ledit dispositif de commande est adapté pour amener le dispositif à reculer si ledit obstacle continue à être détecté après que ledit signal d'alarme ait été émis.

2. Dispositif selon la revendication 1, dans lequel ledit dispositif de commande (14) est capable de fonctionner sur la base d'une commande à boucle fermée.

3. Dispositif selon l'une quelconque des revendications précédentes, comprenant en outre une source d'énergie (10) acheminée par ladite plate-forme (28).

4. Dispositif selon la revendication 3, dans lequel ladite source d'énergie (10) est rechargeable.

5. Dispositif selon la revendication 4, comprenant en outre une pluralité de cellules solaires (4) permettant de recharger ladite source d'énergie rechargeable (10).

6. Dispositif selon la revendication 1, comprenant en outre une roue pivotante venant en prise avec le sol (3) soutenue par ladite plate-forme (28) en une position espacée desdites roues d'entraînement (2).

7. Dispositif selon l'une quelconque des revendications précédentes, adapté pour fonctionner en tant que tondeuse, ladite plate-forme (28) portant un dispositif de tonte de gazon.

8. Dispositif selon l'une quelconque des revendications précédentes, dans lequel ledit dispositif de commande (14) est pré-programmé avec une pluralité de trajectoires différentes pouvant être sélectionnées à l'intérieur d'une zone prédéterminée.

9. Dispositif selon l'une quelconque des revendications précédentes, dans lequel ledit dispositif de commande (14) peut être manuellement programmé.

10. Dispositif selon la revendication 9, dans lequel une interface opérateur (15) est soutenue par ladite plate-forme (28), pour permettre la programmation dudit dispositif de commande (14) par un opérateur.

11. Dispositif selon la revendication 9, dans lequel ledit dispositif de commande (14) comprend un récepteur de signaux (32), pour permettre de programmer ledit dispositif de commande (14) avec un dispositif de programmation à télécommande générant un signal (27).

12. Dispositif selon l'une quelconque des revendications précédentes, dans lequel lesdits moyens d'entraînement (11, 12) sont capables d'entraîner indépendamment chaque dite roue d'entraînement dans les directions avant et arrière.

13. Dispositif selon l'une quelconque des revendications précédentes, dans lequel lesdits moyens d'entraînement (11, 12) sont capables d'entraîner de manière indépendante chaque dite roue d'entraînement à des vitesses variables.

14. Combinaison d'un dispositif selon l'une quelconque des revendications précédentes avec au moins un conducteur allongé (23) positionné de manière à définir les bordures de ladite zone prédéterminée, et un générateur de signaux (25) permettant d'envoyer un signal de limite d'un caractère prédéterminé audit conducteur allongé (23), ledit détecteur (6) étant capable de détecter ledit signal de limite lorsque le dispositif approche d'une limite de ladite zone prédéterminée.

15. Combinaison selon la revendication 14, dans laquelle ladite zone prédéterminée comprend dans ses limites une zone exclue (30, 31), au moins un autre conducteur allongé (24) est positionné de manière à définir les limites de ladite zone exclue (30, 31) et un générateur de signaux (26) est prévu pour envoyer un signal de limite de caractère prédéterminé, pouvant être distingué dudit signal de limite, audit autre conducteur allongé (24), ledit détecteur (6) étant capable de détecter ledit signal de limite lorsque le dispositif s'approche des limites de ladite zone exclue.
